(19) Europäisches Patentamt
European Patent Office
Office européen des brevets

(11) Publication number: 0 018 061
A1

(12) EUROPEAN PATENT APPLICATION

(21) Application number: 80300332.6

(51) Int. Cl.³: B 29 J 5/00

(22) Date of filing: 05.02.80

(30) Priority: 09.03.79 GB 7908355

(43) Date of publication of application: 29.10.80
Bulletin 80/22

(84) Designated Contracting States: BE DE FR GB IT SE

(71) Applicant: IMPERIAL CHEMICAL INDUSTRIES LIMITED,
Imperial Chemical House Millbank, London SW1P 3JF
(GB)

(72) Inventor: Clegg, William Raymond, 28 Carr Lane,
Greenfield, Nr.Oldham (GB)
Inventor: Redman, Richard Paul, 10 Earley Hill Road,
Reading, Berks RG6 2BJ (GB)

(74) Representative: Ricks, Michael James et al, Imperial
Chemical Industries Limited Legal Department: Patents
Thames House North Millbank, London SW1P 4QG (GB)

(54) **Methods for the manufacture of sheets or moulded bodies.**

(57) A process for the manufacture of sheets or moulded bodies which comprises the steps of

(a) continuously forming an emulsion of an organic polyisocyanate in water,

(b) distributing the emulsion thus formed, without storage, over a mass of lignocellulosic material, and

(c) hot pressing the product.

The process is useful for the manufacture of particle board.

EP 0 018 061 A1

This invention relates to sheets or moulded bodies and to methods for their manufacture, and in particular to the manufacture of sheets or moulded bodies formed by hot pressing of a mass of lignocellulosic material mixed with a binding agent comprising an aqueous emulsion of an organic polyisocyanate.

The use of aqueous emulsions of organic polyisocyanates as a binder in the manufacture of sheets or moulded bodies formed by hot pressing a mass of ligno cellulosic material (referred to hereinafter as "particleboard") is well known and is described for example in United Kingdom Patent Specification No.1523601.

The use of aqueous emulsions of organic polyisocyanates offers a number of advantages to the particleboard manufacturer. Thus a low viscosity resin system is obtained which can readily be applied to the lignocellulosic material using conventional equipment. Furthermore the distribution of the organic polyisocyanate in the form of fine droplets dispersed throughout the aqueous phase results in a much better distribution of the organic polyisocyanate binder over the lignocellulosic material and thereby reduces the level of polyisocyanate required to achieve satisfactory binding. The dispersed droplets of organic polyisocyanate also permit a more rapid reaction with the water to achieve the binding action, and the shorter pressing times thus required provide increased production.

Despite these advantages, aqueous emulsions of organic polyisocyanates have a limited practical lifetime within which they must be used if satisfactory results are to

be obtained. The emulsions may be unstable with respect to separation into discrete aqueous and organic layers, but the "pot life" of the emulsions is more usually limited by reaction between the water and the organic polyisocyanate which results in loss of isocyanate strength and the formation of gels or pastes. This pot life may be further reduced in the presence of additives, such as wax emulsions, which it is otherwise advantageous to incorporate in the particleboard. Other additives such as aminoplast or phenoplast resins, which may sometimes offer advantages when used in combination with the organic polyisocyanate, or additives such as fungicides have to be added separately to avoid rapid reaction with the organic polyisocyanate emulsion.

In our copending United Kingdom Patent Application No.12227/78, there is claimed an isocyanate composition emulsifiable in water which comprises an organic polyisocyanate in admixture with at least 1 part but less than 5 parts by weight based on 100 parts by weight of the polyisocyanate of a surface active agent having the formula:

$$RO(CH_2CH_2O)_nCONHX$$

in which R is an alkyl group having from 1 to 4 carbon atoms, n is an integer such that the compound contains an average of at least 5 oxyethylene groups and X is the residue of a polyisocyanate and contains at least one free isocyanate group.

The above isocyanate composition contains a lower proportion of surface active agent than the corresponding

previously known composition as described in United Kingdom Patent Specification No.1444933, and the above compositions are found to have advantages in providing an emulsion which is stable, has a longer pot life and retains its isocyanate strength for a longer period than the emulsions formed from prior art compositions. However, the increased pot life obtained with reduced surfactant levels is found to be achieved only at the expense of an increased difficulty in the formation of a finely dispersed emulsion, and in consequence the advantages offered by the use of organic polyisocyanate emulsions (good distribution of the binder over the lignocellulosic material and reduced curing time in the press) may not be fully realised in such systems.

According to the present invention there is provided a process for the manufacture of sheets or moulded bodies which comprises the steps of

(a) continuously forming an emulsion of an organic polyisocyanate in water,

(b) distributing the emulsion thus formed, without storage, over a mass of lignocellulosic material, and

(c) hot pressing the product.

The emulsion is preferably formed by discharging the organic polyisocyanate continuously at elevated pressure through an orifice into an aqueous medium. The orifice is preferably located within the aqueous medium.

It is especially advantageous to discharge the organic polyisocyanate continuously at elevated pressure through an orifice located within an aqueous stream, thereby forming an emulsion stream which is immediately distributed over the mass of lignocellulosic material.

In addition to the well known benefits of continuous operation, the process of the present invention offers the significant advantage that the effective "pot life" of the emulsion between its formation and contacting the mass of lignocellulosic material may be made as short as desired, and will in general be a matter of seconds only. In this way the maximum advantage may be obtained from relatively unstable emulsions whose practical utility has hitherto been limited by an unacceptably short pot life.

Thus for example, whilst relatively low surfactant concentrations may be used if desired (and indeed the process of the invention is capable of producing good emulsions using surfactant concentrations as low as 0.5 parts by weight per 100 parts by weight of organic polyisocyanate or even with no surfactant in the presence of certain additives for example wax emulsions or aminoplast resins), the full benefits in terms of improved binder distribution and shorter press times may be obtained using surfactant concentrations in excess of 4 parts by weight per 100 parts by weight of organic polyisocyanate. The relatively short "pot lives" of such emulsions are of no consequence in the process of the present invention.

The process of the present invention also permits the incorporation into the aqueous stream of additives (for example wax emulsions, fungicides, and aminoplast and phenoplast resins) which would hitherto have been considered too reactive or insufficiently compatible to be incorporated with the organic polyisocyanate emulsion.

Organic polyisocyanates suitable for use as a binder in the manufacture of particleboard may be used in the process of the present invention. Organic polyisocyanates include

di-isocyanates, particularly aromatic di-isocyanates and isocyanates of higher functionality. Typical organic polyisocyanates are listed for example in United Kingdom Patent Specification No.1444933. They include isocyanate-ended prepolymers made by reaction of an excess of a polyisocyanate with a hydroxyl-ended polyester or polyether and products obtained by reacting an excess of a polyisocyanate with an excess of a monomeric polyol. We have obtained very satisfactory results using a crude mixture of methylene-bridged polyphenyl polyisocyanates containing di-, tri- and higher functionality polyisocyanates. This organic polyisocyanate is known as crude MDI and is prepared by phosgenating a mixture of the polyamines obtained by condensing aniline and formaldehyde.

The surface active agent may be incorporated in the aqueous stream prior to the discharge into it of the organic polyisocyanate or the surface active agent may be incorporated in the organic polyisocyanate (as described for example in United Kingdom Patent Specification No.1444933).

The proportion of organic polyisocyanate to water in the emulsion may be that conventionally used for particleboard manufacture, as described for example in United Kingdom Patent Specification No.1523601.

A typical apparatus for use with the process of the present invention is illustrated in Figure 1. In Figure 1, an aqueous stream is fed into a mixing chamber (1) from a storage vessel (2) by means of a pump (3). Organic polyisocyanate is fed from storage vessel (4) by means of a pump (5), and is discharged into the mixing chamber (1)

through an orifice (6) in a direction perpendicular to the flow of the aqueous stream. The emulsion thus formed passes down the exit tube (7) and enters a conventional blender (not shown) in which it is dispersed over the mass of lignocellulosic material, and the whole is then hot-pressed by conventional means to form the sheet or moulded body.

Surface active agents and other additives may be incorporated in either storage vessel (1) (with the aqueous phase) or in storage vessel (4) (with the organic polyisocyanate) as desired. Pump (3) which feeds the aqueous stream will in general be a low pressure positive displacement pump, whilst pump (5) is a high pressure positive displacement pump which should be capable of discharging organic polyisocyanate at a pressure of for example from 100 to 150 bar so as to obtain a pressure drop of this order across the orifice (6). The orifice (6) may take a variety of forms and may for example be a diesel injector.

It will be appreciated that the ratio of the organic polyisocyanate to water, and the ratio of organic polyisocyanate to lignocellulosic material may be controlled by means of the flow rates provided by pumps (3) and (5). If desired, a continuous monitoring device may be provided to couple the flow rate controls of pumps (3) and (5) with for example signals indicating the rate of entry of lignocellulosic material into the blender and/or the humidity of the lignocellulosic material.

The invention is illustrated by the following Examples in which all parts and percentages are by weight unless otherwise stated.

Example 1

Particleboards were manufactured using the apparatus illustrated in Figure 1. The organic isocyanate used was crude MDI (as herein defined) containing 9.3% of a surfactant prepared as described in United Kingdom Patent Specification No.1444933 by the reaction of crude MDI with methoxypolyethyleneglycol. The emulsifiable crude MDI was then fed at a flow rate of 2 kg/min into a water stream passing at a rate 2.7 kg/min to give a total emulsion flow of 4.7 kg/min. The ratio of emulsifiable crude MDI to dry wood chips was 6%, and the composition of the board produced was thus:

| | |
|---|---|
| Wood (containing 2% moisture) | 102 parts |
| Emulsifiable crude MDI | 6 parts |
| Added water | 8 parts |

The wood chips were treated with the emulsified binder in a conventional blender and the resultant boards were pressed at 175°C for a period of 12 seconds per mm. The nominal thickness of the board produced was 19 mm.

By way of comparison, the above procedure was repeated except that the emulsion formed in the apparatus of Figure 1 was not passed directly into the blender, but was stored for a period of 2 hours such as might be encountered in previous commercial practice. The properties of the sample according to the invention and of the comparison are given below in Table 1. It can be seen that the control board is weaker and generally inferior to the board produced using the process of the present invention.

Table 1

| | Example 1 | Comparison |
|---|---|---|
| Density ($Kgm^{-3}$) | 655 | 650 |
| 2 hour swelling (%) | 2.6 | 3.0 |
| 24 hour swelling (%) | 10.9 | 12.6 |
| Transverse tensile strength dry (V 20) $kg/cm^2$ | 10.0 | 7.0 |
| Transverse tensile strength wet (V 100) $kg/cm^2$ | 3.6 | 2.0 |

Example 2

The procedure of Example 1 was repeated using (a) crude MDI containing 0.7% of surfactant and (b) crude MDI containing 9.3% of surfactant. In each case the emulsion was passed directly into the blender for dispersion over the wood chips, and sets of boards thus formed were pressed for 15 seconds/mm and 10 seconds/mm respectively. The formulation of the boards was:-

| | |
|---|---|
| Wood chip (containing 2% moisture) | 102 parts |
| Emulsifiable crude MDI | 6 parts |
| Additional water | 8 parts |

The temperature of the press was 175°C, and the nominal thickness was 19 mm.

The properties of the boards produced are given in Table 2. It can be seen than an undesirable level of "springback" has occurred using the lower surfactant level at the shorter (10 sec/mm) press time. This is indicative of a slower curing rate obtained using the lower surfactant concentration. Excellent results were obtained using the higher surfactant concentration, although it may be noted that the pot life of emulsions prepared from the composition having the higher surfactant level was only 2½ hours as

opposed to a pot life in excess of 5 hours for the lower surfactant level.

Table 2

| Surfactant level (% based on MDI) | 9.3 | | 0.7 | |
|---|---|---|---|---|
| Press time (sec/mm) | 15 | 10 | 15 | 10 |
| Thickness (mm) | 19.0 | 19.1 | 18.9 | 19.6 |

Example 3

The procedure of Example 1 was repeated using crude MDI containing no surfactant, except that there was incorporated in the water stream a wax emulsion containing 65% solids and available commercially as Mobilcer 361. The formulation of the emulsion was thus:

| | |
|---|---|
| Water | 5.5 parts |
| Mobilcer 361 | 1.5 parts (1.0 parts wax) |
| Crude MDI | 6.0 parts |

The emulsion was formed using the apparatus of Figure 1 to give a silky creamy mix which could readily be passed to a blender at a rate of 4.3 kg/min to give a very satisfactory treatment of the wood chips.

By way of comparison 2 kg of a corresponding emulsion was prepared using a Silverson mixer. The preparation of the emulsion took 1 minute, and on gently stirring the emulsion formed a viscous sticky mass over a period of less than 15 minutes.

The crude MDI used in Examples 1-3 had an NCO content of 30.2% and contained 55% of diphenylmethane diisocyanates.

## CLAIMS

1. A process for the manufacture of sheets or moulded bodies by hot pressing a mass of lignocellulosic material to which an aqueous emulsion of an organic polyisocyanate has been applied characterised in that an emulsion of organic polyisocyanate in water is formed continuously and is then distributed, without storage, over the mass of lignocellulosic material which is then hot pressed.

2. A process according to claim 1 wherein the emulsion is formed by discharging the organic polyisocyanate continuously at elevated pressure through an orifice into an aqueous medium.

3. A process according to claim 2 wherein the orifice is located within the aqueous medium.

4. A process according to claim 3 wherein the orifice is located within an aqueous stream, thereby forming an emulsion stream which is immediately distributed over the mass of lignocellulosic material.

5. A process according to any one of the preceding claims wherein the emulsion contains more than 4 parts by weight of a surfactant per 100 parts by weight of organic polyisocyanate.

6. A process according to any one of the preceding claims wherein the organic polyisocyanate is a crude mixture of methylene-bridged polyphenyl polyisocyanates containing di-, tri- and higher functionality polyisocyanates.

KS/BH
1.2.80.

Fig.1.

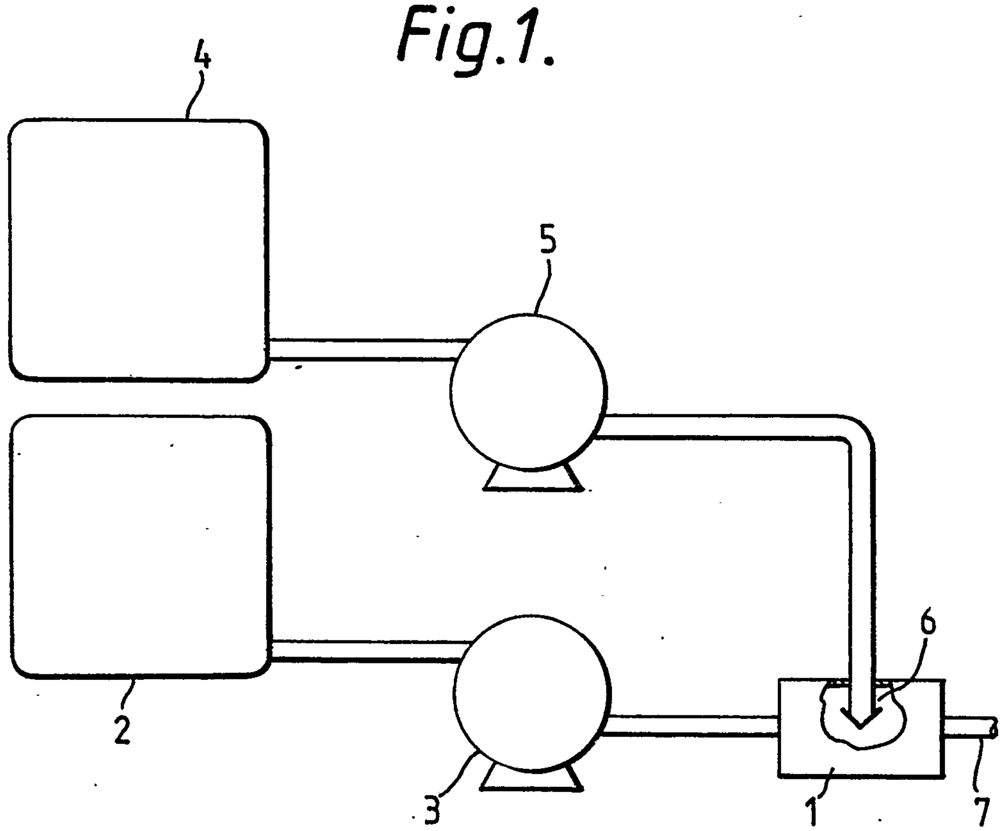

European Patent Office

# EUROPEAN SEARCH REPORT

0018061

Application number

EP 80 30 0332

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| D | GB - A - 1 523 601 (IMPERIAL CHEMICAL INDUSTRIES LTD.)<br>* page 1, line 45 to page 2, line 9; page 4, lines 13 to 15*<br>& DE - A1 - 2 610 552<br>-- | 5,6 | B 29 J 5/00 |
| D | GB - A - 1 444 933 (IMPERIAL CHEMICAL INDUSTRIES LTD.)<br>-- | | |
| A | DE - A1 - 2 515 775 (STORY CHEMICAL CORP.)<br>* page 4, line 12 to page 5, line 9; page 7, lines 8 to 20 *<br>---- | | TECHNICAL FIELDS SEARCHED (Int.Cl.3)<br>B 29 J 5/00<br>C 08 G 18/76<br>C 08 H 5/04<br>C 08 L 75/00<br>C 08 L 97/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 25-04-1980 | BRUCK |